# EUROPEAN PATENT APPLICATION

(11) **EP 3 413 226 A1**
(43) Date of publication of application: **12.12.2018**
(21) Application number: 17305672.2
(22) Date of filing: 07.06.2017
(51) Int. Cl.: G06F 21/36, H04L 29/06, H04W 12/06, G06F 21/32, G06F 21/34

(54) **METHOD FOR AUTHENTICATING A USER AND CORRESPONDING DEVICE AND SYSTEM**

(71) Applicant: GEMALTO SA, 92190 Meudon (FR)
(72) Inventor: LE CARDINAL, Daniel, 13881 GEMENOS CEDEX (FR); PIN, Yannick, 13881 GEMENOS CEDEX (FR); AILLAUD, Christophe, 13881 GEMENOS CEDEX (FR)

(57) **Abstract**

The invention relates to a method 40 for authenticating a first user.

According to the invention, a device (12) accesses a sequence (20) of at least one reference graphical item, as a reference graphical item sequence. The reference graphical item sequence is known only to the first user. The method comprises the following steps. the device requests or lets request a user to point consecutively at at least one area in which at least one graphical item is included. The device presents or lets present (410) a sequence of at least one graphical item. The device captures or lets capture (414) a sequence of at least one area pointed by the user. The device verifies or lets verify (418) whether the sequence of the at least one user pointed area does or does not include the reference graphical item sequence. And the device authenticates (420) the first user only if the sequence of the at least one user pointed area includes the reference graphical item sequence.

The invention also relates to corresponding device and system.

## Description

### Field of the invention:

The invention relates generally to a method for authenticating a first user.

Furthermore, the invention pertains to a first device for authenticating a first user.

The present invention is notably applicable to a mobile radio-communication field in which the first device is a mobile terminal, like e.g., a mobile (tele)phone, as a standalone entity or in cooperation with a device(s), like e.g., a Secure Element (or SE).

Within the present description, an SE is a smart object that includes a chip(s) that protect(s), as a tamper resistant component(s), access to stored data and that is intended to communicate data with a device(s), like e.g., an SE host device, such as a (mobile) phone.

Moreover, the invention relates to a system for authenticating a first user. The system includes two or more devices.

### State of the art:

It is known to authenticate a user by using a keyboard of a mobile phone to submit a Personal Identity Number (or PIN) to be verified by an SE hosted by the phone.

It is also known to authenticate a user in a dynamic manner, i.e. the person is alive, by using, for instance, a camera for recognizing one or several user faces.

There is a need of an alternative solution while authenticating securely a user.

### Summary of the invention:

The invention proposes a solution for satisfying the just herein above specified need by providing a method for authenticating a first user.

According to the invention, a device accesses a sequence of at least one reference graphical item, as a reference graphical item sequence. The reference graphical item sequence is known only to the first user. The method comprises the following steps. The device requests or lets request a user to point consecutively at at least one area in which at least one graphical item is included. The device presents or lets present a sequence of at least one graphical item. The device captures or lets capture a sequence of at least one area pointed by the user. The device verifies or lets verify whether the sequence of the at least one user pointed area does or does not include the reference graphical item sequence. And the device authenticates the first user only if the sequence of the at least one user pointed area includes the reference graphical item sequence.

The principle of the invention consists in using a device(s) to query (or let query) a user about an ordered set of one or several graphical items while asking (or letting ask) her/him to identify or select successively an area(s) including a graphical item(s). Each such selected graphical item has to be comprised within previously registered reference user credentials, as a sequence of one or several reference graphical items. To select a graphical item(s) to be submitted, the user has to aim or point, in an order of appearance (or presentation) of the graphical item(s) included within the reference graphical item sequence, at corresponding successive area(s). The device detects (or captures) (or lets detect) a sequence of one or several areas that are successively identified or selected by the user. The device checks (or lets check) whether (or not) the user selected area sequence includes the reference graphical item sequence. The device authenticates (or not) the user when the user selected area sequence includes (or does not include respectively) the reference graphical item sequence.

Only the user who knows the reference graphical item sequence is thus able to authenticate while pointing at the corresponding right area sequence, as a reference area sequence.

Such a user knowledge of the reference graphical item sequence, as reference user credentials, and a user recognition of the reference graphical item sequence allow authenticating the user by or through the device.

The device may be a standalone entity or may cooperate with another device(s) to authenticate securely a user(s).

The invention solution allows thus authenticating securely a system or device user, as something that the user knows, as a first factor of authentication.

Each reference graphical item may be of any type, like e.g. a two or three dimension object that may be static or dynamic. Thus, the number of possibilities for a graphical item value is large and much larger than the one for a digit value used within a known PIN solution.

Thus, the invention solution enhances the security with respect to the known PIN solution by increasing the number of the graphical item values and therefore the number of associated graphical item combination values, as reference user credentials.

The used technology to present each graphical item to the user may be of any kind, like e.g., a display through one or several display screens and/or an appearance through one or several holograms.

The invention solution is secure since, unlike a PIN submission, the user does not need to physically touch any Man Machine Interface (or MMI) included within or coupled to the device to validate a user pointing or selection of an area that contains (or not) a reference graphical item(s) comprised within the reference graphical item sequence. Thus, a potential attacker can not use accelerometers or any other means to capture a sequence of corresponding depressed keys, as the reference graphical item sequence.

The invention solution is visual, simple and quick to use for the user who does not need to depress any key within a keyboard to select a sequence of an area(s) to be used for a comparison of a content of the user selected area sequence to a reference graphical item sequence.

The invention solution is therefore convenient for the user who may, in a contact-less manner, select a graphical item(s) to be included in a submitted graphical item sequence.

According to an additional aspect, the invention is a device for authenticating a first user.

According to the invention, the first device comprises means for storing a sequence of at least one reference graphical item, as a reference graphical item sequence. The reference graphical item sequence is known only to the first user. The first device is configured to request a user to point consecutively at at least one area in which at least one graphical item is included. The first device is configured to present a sequence of at least one graphical item. The first device is configured to capture a sequence of at least one area pointed by the user. The first device is configured to verify whether the sequence of the at least one user pointed area does or does not include the reference graphical item sequence. And the first device is configured to authenticate the first user only if the sequence of the at least one user pointed area includes the reference graphical item sequence.

The device may be a terminal, like e.g., a mobile phone or a Personal Computer (or PC), an SE or any kind of communicating and computing device.

According to still a further aspect, the invention is a system for authenticating a first user.

According to the invention, the system includes a first device and at least one second device. The first device comprises means for storing a sequence of at least one reference graphical item, as a reference graphical item sequence. The reference graphical item sequence is known only to the first user. The first device or the at least one second device is configured to request a user to point consecutively at at least one area in which at least one graphical item is included, to present a sequence of at least one graphical item, to capture a sequence of at least one area pointed by the user and to verify whether the sequence of the at least one user pointed area does or does not include the reference graphical item sequence. And the first device or the at least one second device is configured to authenticate the first user only if the sequence of the at least one user pointed area includes the reference graphical item sequence.

The system may be a Terminal Equipment (or TE) including a mobile phone, as a first device, and an SE, as a second device.

### Brief description of the drawings:

Additional features and advantages of the invention will be apparent from a detailed description of one preferred embodiment of the invention, given as an indicative and non-limitative example, in conjunction with the following drawings:
- Figure 1 illustrates a simplified diagram of an embodiment of a system comprising a TE, the TE being configured to authenticate a user on a basis of a sequence of a reference graphical item(s) to be recognized visually by the user, according to the invention;
- Figure 2 represents an example of the reference graphical item sequence that is to be pointed through a user eye(s) and to be detected, through a corresponding sequence of a user pointed area(s), by the TE, according to the invention;
- Figure 3 is an example of the user pointed area sequence that includes the reference graphical item sequence of figure 2, according to the invention; and
- Figure 4 illustrates a simplified message flow between a user, the phone and the SE of figure 1 to implement a particular embodiment of a method for authenticating a user using the user pointed area sequence of figure 3, so as to authenticate (or not) the user, according to the invention.

### Detailed description:

Herein under is considered an exemplary embodiment in which the invention method for authenticating a first user is implemented by a TE, as a system for authenticating a first user, including a mobile terminal comprising within or being coupled or connected to an SE.

According to another exemplary embodiment (not represented), the invention method for authenticating a first user is implemented by a terminal, as a standalone device for authenticating a first user. In other words, the terminal does not cooperate with any other device, like e.g., an SE(s), in order to authenticate the first user. According to such an embodiment, the device for authenticating a first user is adapted to perform the functions that are carried out by the SE and described infra apart from a secure storage and a secure verification relating to the reference graphical item sequence.

The SE may be an incorporated chip, like e.g., an embedded Universal Integrated Circuit Card (or eUICC) or an integrated Universal Integrated Circuit Card (or iUICC), within a terminal, as an SE host device, or a chip that is coupled to the terminal, as an SE host device, and included within a smart card (or another medium). The chip may therefore be fixed to or removable from its host device, like e.g., a mobile phone.

The invention does not impose any constraint as to a kind of the SE type.

As removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as a device for authenticating a user.

Naturally, the herein below described embodiment is only for exemplifying purposes and is not considered to reduce the scope of the invention.

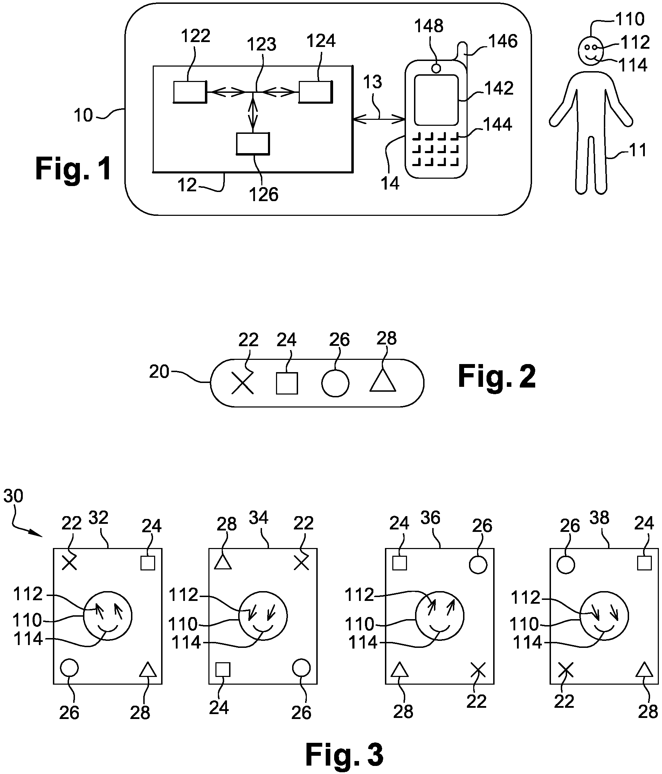

**Figure 1** shows schematically a system 10 including a (mobile) TE 10 that includes a phone 14 and an SE 12 that is connected or coupled to the phone 14.

The SE 12 includes one or several chips.

The SE chip(s) may incorporate at least part of the phone component(s), like e.g. a baseband processor, an application processor(s) and/or other electronic component(s).

Alternately, the SE chip(s) include(s) a Trusted Execution Environment (or TEE), as a secure area of a phone (or terminal) processor and a secured runtime environment.

The SE chip(s) is(are) preferably incorporated, possibly in a removable manner, within a Printed Circuit Board (or PCB) of the phone 14, as an SE host device.

The SE may nevertheless have different form factors.

Instead of being embedded or integrated within its host device, the SE chip(s) may be carried by a medium, such as a smart card or a dongle, like e.g., a USB type dongle, and is(are) communicatively coupled or connected to its host device.

The invention does not impose any constraint as to a kind of the SE, when present.

The SE 12 belongs preferably to a user 11, as a first user.

The SE 12 includes one or several chip(s). The or one or several SE chips comprise(s) a (micro)processor(s) 122, as data processing means, a memory(ies) 124, as data storing means, and one or several Input/Output (or I/O) interfaces 126 that are internally all connected, through an internal bidirectional data bus 123, to each other.

The I/O interface(s) 126 allow(s) communicating data from the internal SE chip(s) to the chip exterior and conversely.

The memory 124 stores an Operating System (or OS).

The memory 124 (or the phone memory) stores preferably an invention application for authenticating a user 11. Such a user authentication application allows recognizing the user 11, i.e. ensuring that a user who undergoes a corresponding authentication process is the genuine one. The application for authenticating a first user 11 is based on a sequence of one or several reference graphical items, as a reference graphical item sequence to be pointed or retrieved by the user 11. The reference graphical item sequence is known only to the user 11 who has previously registered (or let register) her/his reference graphical item sequence within the SE 12 (or a device connected or coupled to the SE 12).

The SE memory 124 (or the phone memory) stores preferably and securely the reference graphical item sequence, as reference user credentials.

Alternately, instead of storing the reference graphical item sequence, the SE 12 is connected or coupled to another device, possibly through the phone 14, that stores the reference graphical item sequence which the SE 12 accesses to.

The SE memory 124 may store, as additional user credentials, a reference PIN(s), a reference password(s), a reference passphrase(s), a reference One Time Password(s) (or OTP), a reference user biometric feature(s), like e.g., a reference fingerprint(s), a reference voice(s), a reference iris, a reference user palm(s), a reference vein(s) and/or a reference face(s) relating to the concerned user 11, so as to authenticate the user 11.

The SE memory 124 may store an International Mobile Subscriber Identity (or IMSI) and/or an email address(es), as an identifier(s) relating to the user 11.

The SE 12 (processor 122) is preferably dedicated to running the application for authenticating the user 11.

The SE 12 is configured to request or let request, preferably through a phone 14 MMI, a user to point consecutively at one or several areas in each of which one or several graphical items are included.

The SE 12 may be adapted to generate one or several holograms including one or several graphical items to be presented to a user to be authenticated.

The SE 12 is arranged to let present, preferably through a phone display screen 142 (and/or (an)other display screen(s) accessible from the SE 12) and/or an hologram(s), one or several graphical items.

Optionally, the SE 12 is configured to let present (or present), in a random manner, the graphical item(s), as a graphical item sequence. Such a random presentation of the graphical item(s) allows increasing, for a potential attacker, the level of difficulty for retrieving the reference graphical item sequence to be recognized by a user.

The presented graphical item sequence includes the registered reference graphical item sequence, so as to allow authenticating successfully the user 11.

The SE 12 is adapted to let detect or capture (or capture) a sequence of one or several areas pointed by the user 11. Such a user pointing at an area sequence is preferably visual, i.e. the concerned user stares sequentially the area(s) including, each, none, one or several graphical items to be submitted.

To let capture the user pointing area sequence, the SE 12 is preferably arranged to use preferably a phone camera 148 and/or (an)other camera(s) connected or coupled to the SE 12.

To let capture the user pointing area sequence, the SE 12 is preferably configured to let detect one or several predetermined changes of one or several physical user features, so as to validate each (consecutive) submitted user pointed area, one or several submitted user pointed areas and/or the submitted user pointed area sequence. The SE 12 stores the predetermined change(s) of the physical user feature(s), so as to validate part or all of the graphical items comprised within the graphical item sequence. The detection of the predetermined change(s) of the physical user feature(s) is carried out preferably through the phone camera 148 (and/or (an)other camera(s) connected or coupled to the SE 12), i.e. in a contact-less manner between the user and the TE 10.

According to an essential invention feature, the SE 12 is configured to verify whether (or not) the user pointed area sequence includes the reference graphical item sequence.

According to a preferred embodiment, the SE 12 is configured to extract, from each (consecutive) submitted user pointed area, a corresponding submitted graphical item(s), when this(these) graphical item is(are) effectively present within the user pointed area. Then, the SE 12 is adapted to compare a corresponding resulting extracted submitted graphical item sequence to the (accessible) reference graphical item sequence. The SE 12 is adapted to analyse whether the (submitted) graphical item sequence does or does not match the reference graphical item sequence.

The SE 12 is adapted to generate one or several (partial) comparison result(s), for instance graphical item by graphical item, and/or an authentication result, i.e. a successful or an unsuccessful user authentication status.

The SE 12 is arranged to store (or let store) within the SE memory 124 the comparison result(s) and/or the authentication result(s).

Only if the user pointed area sequence includes the reference graphical item sequence, the SE 12 authenticates successfully the user 11.

Only if the submitted graphical item sequence matches the reference graphical item sequence, the authentication result is set to a successful user authentication status, like e.g., "ok" or "you are authenticated". Otherwise, i.e. if the submitted graphical item sequence does not match the reference graphical item sequence, the authentication result is set to an unsuccessful user authentication status, like e.g., "ko" or "you fail to authenticate".

The SE 12 (processor) executes preferably one or several user authentication functions, like e.g., a biometric user authentication, i.e. "who you are", as at least one second authentication factor. The SE 12 (or is connected or coupled to a device(s)) stores preferably and securely one or several reference biometric features that are specific to the user 11. The SE 12 is configured to request or let request a user to provide, preferably through the camera 148 and/or a biometric sensor(s) (not represented), data, like e.g., a user face(s) 110, as user biometric feature(s). The SE 12 is adapted to capture or let capture, preferably through the phone camera 148 (and/or (an)other camera(s) connected or coupled to the SE 12) 148 and/or the biometric sensor(s), one or several user biometric features, as data provided by the user. The SE 12 is configured to verify whether (or not) each of the captured user biometric feature(s) matches one reference user biometric feature. Only if a part or all of the captured user biometric feature(s) matches one or several reference user biometric features depending on a predetermined security level, the SE 12 authenticates successfully the user 11. The security level may be more or less severe. A low security level may require that only one of the captured user biometric feature(s) matches one particular reference user biometric feature. An intermediate security level may require that two or more of the captured user biometric features match two or more corresponding particular reference user biometric features, like e.g., the user face 110 and the user eye(s) 112. A high security level may require that each captured user biometric feature matches one particular reference user biometric feature.

The SE 12 (processor) may further execute one or several security functions, in order to protect access to information managed through or by the SE 12.

The security functions include preferably a data encryption by using a public key related to a destination device, such as the SE host device or a server, so as to protect access to the concerned encrypted data to be sent to the destination device. The security functions include preferably a data decryption by using a private key related to the SE 12, so as to access to the concerned decrypted data (in plain text). The security functions include preferably a data signature by using a private key related to the SE 12, so as to prove that an originator of data to be sent to the destination device is the SE 12.

The SE 12 is connected or coupled to the phone 14, as a user terminal, through a bi-directional contact or ConTact-Less (or CTL) link 13.

Instead of being included within the phone 14, the (SE) chip(s) is(are) mechanically independent from the phone 14 and included within a medium. The (chip) medium may be a watch or a headset, as an accessory of the phone 14. The medium may be any other device, like e.g., a camera, a clothing, a jewel or anything that may accommodate or integrate the SE chip(s), which the user 11 wears or accesses.

Instead of the phone 14, the user terminal may be a desktop computer, a laptop computer, a media-player, a game console, a tablet, a netbook, a handset and/or a Personal Digital Assistance (or PDA) that incorporates or cooperates with a baseband (radio) processor(s).

Instead of the phone 14, the user terminal may be any other device including means for processing data, comprising or being connected to contact or CTL communication means for exchanging data with outside, and comprising or being connected to means for storing data.

Within the present description, the adjective "CTL" denotes notably that the communication means communicates via one or several Short Range (or SR) type Radio-Frequency (or RF) links.

The SR type RF link(s) may be related to any CTL technology that allows the phone 14 to exchange data, through a CTL type link 13, with the SE 12 and/or, through a Network Access Point (or NAP), a remote server(s). The SR RF may be related to e.g. a Near Field Communication (or NFC), a Wi-Fi, a Bluetooth and/or a Bluetooth Low Energy (or BLE) type communication technology(ies) or the like.

The phone 14, as user terminal, may be used for accessing one or several remote servers (not represented) that provide one or several services, only when the user 11 has been successfully authenticated by the SE 12.

The phone 14 includes one or several (micro)processors and/or (micro)controllers (not represented), as means for processing data, comprising and/or being connected to one or several memories, as means for storing data, comprising or being connected to means for interfacing with a user, as MMI, and comprising or being connected to an antenna(s) 146 for exchanging data with outside.

The phone memories may include one or several EEPROMs (acronym for "Electrically Erasable Programmable Read-Only Memory"), one or several ROMs (acronym for "Read Only Memory"), one or several Flash memories and/or any other memories of different types, like one or several RAMs (acronym for "Random Access Memory").

The antenna 146 allows communicating, through an RF link(s) (not represented), as a wireless link(s), via a communication network(s), data with the remote server(s).

The RF may be fixed at several hundreds of MHz, e.g., around 850, 900, 1800, 1900 and/or 2100 MHz, as Long Range (or LR) type RF.

Alternately or additionally to LR RF, the phone 14 is connected to or include CTL communication means for exchanging data with outside, like e.g., via a Wifi-hotspot (not represented), as a NAP, with the remote server(s).

The phone MMI may include the display screen(s) 142, a keyboard(s) 144, a loudspeaker (not represented) and/or the camera 148.

The phone MMI allows the user 11 to interact with the phone 14 and/or the SE 12.

The phone MMI is used for presenting information to a phone user, like e.g., a message for prompting or requesting the user to point consecutively at one or several areas to provide data, as a submitted sequence of graphical items, as user credentials.

The display screen(s) 142 may be used for presenting a sequence of one or several graphical items.

The camera 148 may be used for capturing a sequence of one or several areas pointed at by the user eye(s) 112.

Figure 2 depicts an exemplary embodiment of a reference graphical item sequence 20.

The reference graphical item sequence 20 may include one or several reference graphical items to be consecutively pointed at and thus recognized by the user 11 depending on a predetermined required security level. A low security level may require that the reference graphical item sequence includes only one reference graphical item. An intermediate security level may require that the reference graphical item sequence includes only two reference graphical items. A high security level may require that the reference graphical item sequence includes more than two reference graphical items.

The reference graphical item sequence 20 that is stored by the SE 12 (and/or the phone 14) is defined specifically by the user 11 or randomly (by a computer) and has to be learnt and memorized by the user 11, so as to be successfully authenticated.

The reference graphical item sequence 20, as an ordered set of four reference graphical items, comprises e.g., a cross 22, as the first reference graphical item, a square 24, as the second reference graphical item, a circle 26, as the third reference graphical item, and a triangle 28, as the fourth reference graphical item.

Each reference graphical item has one or several predefined features. The predefined feature(s) may include a particular shape(s), two or three dimensions, a particular color(s), a particular picture(s), a particular image(s) and/or a particular movie(s) (or film(s)) that may be static or dynamic in translation and/or rotation.

The reference graphical item sequence 20 includes the four reference graphical items 22, 24, 26 and 28.

It is to be noted that the invention does not limit the reference graphical item sequence to four reference graphical items but is still applicable for any number of reference graphical items included within the reference graphical item sequence.

As shown on **Figure 3****,** as a particular example, the phone display screen 142 presents a sequence 30 of four (consecutive) combinations 32, 34, 36 and 38 with, for each combination, four graphical items that are used for authenticating the user.

Each combination may include, among the presented graphical item(s), in a corresponding sequence order in the reference graphical item sequence, none, one or several reference graphical items to be recognized by the user 11.

Each combination includes e.g. four graphical items included in e.g. four separated areas with one graphical item per area. The invention is still applicable with other embodiments having a more or less high number of graphical items for a given combination depending on a predetermined required security level. A low security level may require that, for one given combination, only two graphical items are present and distributed between two corresponding areas with a graphical item per area, like e.g., a first graphical item at a first corner, as an area included within the display screen 142, and a second graphical item (distinct from the first graphical item) at a second corner distinct from the first corner. An intermediate security level may require that, for one given combination, more than two graphical items are present and distributed between more than two corresponding areas. A high security level may require that, for one given combination, more than two graphical items are present and distributed between more than two corresponding areas with a possibly random number of graphical items per area, like e.g. a first graphical item at a first corner, the first and a second graphical item (distinct from the first graphical item) at a second corner (separate from the first corner), the first, the second and a third graphical item (distinct from the first and the second graphical item) at a third corner (separate from the first and the second corner), the first, the second, the third and a fourth graphical item (distinct from the first, the second and the third graphical item) at a fourth corner (separate from the first, the second and the third corner).

The graphical item(s) that is(are) present in each presented combination is(are) preferably determined (preferably in a random manner) by the SE 12 and provided by the SE 12 to the phone 14 with its(their) corresponding associated area(s).

To further enhance the difficulty to retrieve the right graphical item sequence, each presented combination (not represented) may include one or several graphical items which are not included at all within the reference graphical item sequence.

To pass from a presented combination to the following presented combination, the user 11 has firstly to point, among the four corners, at one particular corner that includes a reference graphical item in the right sequence order and secondly to validate the pointed area.

To validate each (consecutive) submitted user pointed area, the user 11 has preferably to change, in a predetermined manner, a physical feature(s).

The predetermined change(s) relating to the physical user feature(s) is e.g. a blink(s) (not represented) of a user eye(s) 112.
Alternatively or additionally, the predetermined user feature change(s) include(s) a user face 110 emotion(s), a user face smile(s), a movement(s) of the user face 110, a movement(s) of the user hand(s) (possibly in front of or around the user face), a number of none or at least one user finger that is presented, a shape of none or at least one user finger that is presented, an opening(s) and/or a closing(s) of the user mouth 114.

The predetermined user feature change(s) relating to the physical user feature(s) is(are) detected preferably in a contact-less manner, like e.g., through the phone camera 148 (and/or (an)other camera(s) connected or coupled to the SE 12), by the phone 14 (and/or the SE 12).

The first graphical item combination 32 that is firstly presented to the user includes, for instance, at a first corner of the display screen 142, the cross 22, at a second corner, the square 24, at a third corner, the circle 26, and, at a fourth corner, the triangle 28.

The user eyes 112 have to point the first corner, i.e. at the top on the left, including the cross 22, when the first graphical item combination 32 is presented.

The user eyes 112 have then to blink, so as to validate the first corner including the cross 22, as a first submitted graphical item, as the first reference graphical item within the reference graphical item sequence. Such a first eye blink is captured through the phone camera 148.

The second graphical item combination 34 that is secondly presented to the user includes, for instance, at the first corner of the display screen 142, the triangle 28, at the second corner, the cross 22, at the third corner, the square 24, and, at the fourth corner, the circle 26.

The user eyes 112 have to point the third corner, i.e. i.e. at the bottom on the left, including the square 24, when the second graphical item combination 34 is presented.

The user eyes 112 have then to blink, so as to validate the third corner including the square 24, as a second submitted graphical item, as the second reference graphical item within the reference graphical item sequence. Such a second eye blink is captured through the phone camera 148.

The third graphical item combination 36 that is thirdly presented to the user includes, for instance, at the first corner of the display screen 142, the square 24, at the second corner, the circle 26, at the third corner, the triangle 28, and, at the fourth corner, the cross 22.

The user eyes 112 have to point the second corner, i.e. i.e. at the top on the right, including the circle 26, when the third graphical item combination 36 is presented.

The user eyes 112 have then to blink, so as to validate the second corner including the circle 26, as a third submitted graphical item, as the third reference graphical item within the reference graphical item sequence. Such a third eye blink is captured through the phone camera 148.

The fourth graphical item combination 38 that is fourthly presented to the user includes, for instance, at the first corner of the display screen 142, the circle 26, at the second corner, the square 24, at the third corner, the cross 22, and at the fourth corner, the triangle 28.

The user eyes 112 have to point the fourth corner, i.e. i.e. at the bottom on the right, including the triangle 28, when the fourth graphical item combination 38 is presented.

The user eyes 112 have then to blink, so as to validate the fourth corner including the triangle 28, as a fourth submitted graphical item, as the fourth reference graphical item within the reference graphical item sequence. Such a fourth eye blink is captured through the phone camera 148.

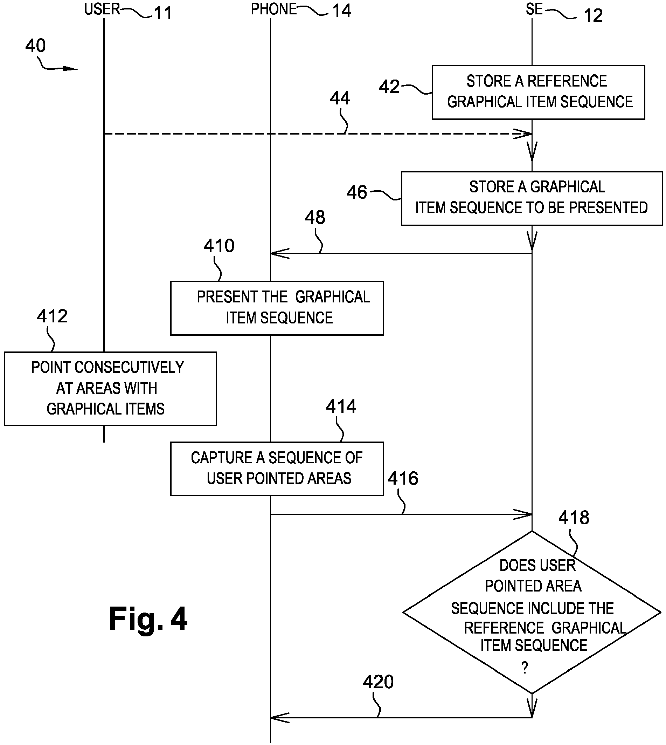

**Figure 4** depicts an exemplary embodiment of a message flow 40 that involves the user 11, the phone 14, as a contact-less interface between the user 11 and the SE 12, and the SE 12, as the user authentication device, to authenticate the user based on the sequence 30 of the four combinations of graphical items.

Initially, the SE 12 stores 42 a reference graphical item sequence.

The user 11 switches 44 on the phone 14.

The SE 12 then launches an execution of the user authentication application.

The SE 12 requests or lets request (not represented) the user 11 to point consecutively at areas in each of which one or several graphical items are included.

The SE 12 generates preferably randomly and stores 46 the generated sequence 30 of the four combinations of graphical items to be presented to a user.

The SE 12 sends to the phone 14 one or several messages 48 including the sequence 30 of the four combinations of graphical items.

It is assumed that the phone 14 uses only the camera 148 to capture a user pointed area sequence including a corresponding submitted graphical item sequence.

Then, the phone 14 presents 410 the graphical item sequence while starting with the first graphical item combination 32, going on with the second 34 and the third 36 graphical item combination and terminating with the fourth graphical item combination 38.

Optionally, prior to presenting a graphical item combination of the sequence 30, the SE 12 authenticates successfully the user 11 based on the captured user face 110, as a particular biometric feature.

The user 11 points 412 consecutively at a particular area during a presentation of each graphical item combination and validates the pointed area.

The phone 14 may come back to the last previous captured graphical item sequence by detecting a predetermined movement of a hand(s) or the head of the user 11, like e.g., from the left to the right or conversely (or from the top to the bottom or conversely) once or several times, as a predetermined change of the physical user feature.

The phone 14 may reset the capture of the graphical item sequence by capturing a predetermined movement of a hand(s) or the head of the user 11, like e.g., from the left to the right or conversely or from the top to the bottom or conversely once or several times, as a predetermined change of the physical user feature.

The user validation may be carried out by a closing of the eyes or one blink of the user eye(s) 112, as a predetermined first change relating to one or several physical user features, or a predetermined time period, like e.g. 3 s, during which the user stares at the concerned pointed area that includes the graphical item that is thus selected and submitted.

The user validation may be confirmed by the phone 14 or the SE 12 in a visual manner (while displaying e.g. a "flash" type screen), in an acoustic manner (while broadcasting e.g. a sound or a music) and/or in a physical manner (while letting physically vibrate the phone 14 and/or letting move the ground or the).

The user 11 may have to terminate a sequence of submitted areas that she or he has pointed by carrying out a series of two or more blinks of the user eye(s), as a predetermined second change relating to one or several physical user features.

Prior to a user validation, the phone 14 may present, through the display screen 142 or another display screen or an hologram, in real time, the graphical item(s) which the user 11 has pointed at or selected possibly by letting the selected graphical item(s) appear, in a distinctive manner, like e.g., by letting it(them) flash, or marking an area including it(them) or displaying a pointer(s) at the selected graphical item(s). The user 11 knows that the phone 14 has correctly captured the user validation.

The phone 14 captures or detects 414, preferably through the camera 148, the validation(s) of each area or all the areas pointed by the user 11, a sequence of areas pointed by the user 11, as a (submitted) user pointed area sequence.

To capture the user pointed area sequence and the user validation, the phone 14 analyses, in the described embodiment, thanks to the camera 148, the images of a film upon only the user face 110, the user eyes 112 and/or the user mouth 114.

In another embodiment, to capture the user pointed area sequence and the user validation, the phone 14 analyses, thanks to the camera 148, the images of a film on only the user fingers with one or two hands that are possibly located, in a hidden manner, in a black box (or the like) that forbids any person situated in the user vicinity to see the user fingers. The user fingers may be used, so as to determine the concerned user pointed area while e.g. detecting a direction pointed by one or several fingers or a number of none or one or several fingers that are presented. The user fingers may be used, so as to determine the concerned selected graphical item that is pointed at or designated through a user finger(s) or drawn with a user finger(s).

The capture or detection of each user validation or the final user validation may be confirmed to the user 11 by displaying or presenting a particular predetermined screen flash or playing a particular predetermined sound or melody.

Once all of the successive user pointed areas have been captured, the phone 14 transmits to the SE 12 the user pointed area sequence 416.

The SE 12 verifies 418 whether the user pointed area sequence does or does not include the reference graphical item sequence. The SE 12 extracts from the user pointed area sequence and concatenates or puts together (not represented) preferably the corresponding extracted graphical items that are thus submitted.

If the user pointed area sequence does not include the reference graphical item sequence, then the SE 12 does not authenticate the user 11.

Otherwise, i.e. if the user pointed area sequence includes the reference graphical item sequence, the SE 12 authenticates successfully the user 11.

Alternatively, instead of sending the user pointed area sequence 416, the phone 14 extracts and concatenates or puts together (not represented) preferably the corresponding submitted graphical items, as a submitted graphical item sequence. Then, the phone 14 transmits to the SE 12 the submitted graphical item sequence.

The SE 12 verifies whether the submitted graphical item sequence does or does not match the reference graphical item sequence.

If the submitted graphical item sequence does not match the reference graphical item sequence, then the SE 12 does not authenticate the user 11.

Otherwise, i.e. if the submitted graphical item sequence matches the reference graphical item sequence, the SE 12 authenticates successfully the user 11.

The invention solution is secure since a potential attacker needs to detect or capture, on the one hand, with a first camera, a sequence of presented graphical item combinations, and, on the other hand, in a synchronous manner, with a second camera, a corresponding submitted user pointed area sequence.

The SE 12 stores an authentication result based on the previous analysis.

The SE 12 sends preferably to the phone 14 a message 420 that includes an authentication result to present to the user 11.

Additionally, the SE 12 may send, possibly through the phone 14, to a server the authentication result (not represented).

The invention solution does not impose any technology to detect which area(s) and/or which corresponding graphical item(s) is(are) selected by the user.

The invention solution allows carrying out a secure user authentication based on a reference graphical item sequence to be recognized by the user.

The invention solution does not impose any length to the reference graphical item sequence.

## Claims

1. A method (40) for authenticating a first user (11),
**characterized in that,** a device (12) accessing a sequence (20) of at least one reference graphical item, as a reference graphical item sequence, the reference graphical item sequence being known only to the first user, the method comprises the following steps:
- the device requests or lets request a user to point consecutively at at least one area in which at least one graphical item is included;
- the device presents or lets present (410) a sequence of at least one graphical item;
- the device captures or lets capture (414) a sequence of at least one area pointed by the user;
- the device verifies or lets verify (418) whether the sequence of the at least one user pointed area does or does not include the reference graphical item sequence; and
- the device authenticates (420) the first user only if the sequence of the at least one user pointed area includes the reference graphical item sequence.

2. Method according to claim 1, wherein each of the at least one reference graphical item has at least one predefined feature, the at least one predefined feature including at least one of the following elements:
- at least one shape;
- at least two dimensions;
- at least one color;
- at least one picture;
- at least one image;
- at least one movie;
- be static;
- be dynamic in translation; and
- be dynamic in rotation.

3. Method according to claim 1 or 2, wherein the device presents or lets present, in a random manner, the at least one graphical item.

4. Method according to any of claims 1 to 3, wherein, the device accessing at least one reference user biometric feature, the at least one reference user biometric feature being specific to the first user, the method further comprises the following steps:
- the device captures or lets capture at least one user biometric feature;
- the device verifies or lets verify whether each of the at least one captured user biometric feature does or does not match one reference user biometric feature;
- the device also authenticates the first user only if a part or all of the at least one captured user biometric feature matches at least one reference user biometric feature depending on a predetermined security level.

5. Method according to any of claims 1 to 4, wherein, to capture or let capture the sequence of the at least one user pointed area, the device detects or lets detect at least one predetermined change relating to at least one physical user feature.

6. Method according to claim 5, wherein the at least one predetermined change relating to the at least one physical user feature includes at least one of the following elements:
- at least one blink of at least one user eye;
- at least one user face emotion;
- at least one user smile;
- at least one movement of the user face;
- at least one movement of at least one user hand;
- a number of none or at least one user finger that is presented;
- a shape of none or at least one user finger that is presented;
- at least one opening of the user mouth; and
- at least one closing of the user mouth.

7. Method according to any of claims 1 to 6, wherein the device includes or is connected or coupled to at least one display screen (142) to present at least one graphical item.

8. Method according to any of claims 1 to 7, wherein the device includes or is connected or coupled to means for generating at least one hologram to present at least one graphical item.

9. A first device (12) for authenticating a first user (11),
**characterized in that,** the first device comprising means (124) for storing a sequence of at least one reference graphical item, as a reference graphical item sequence, the reference graphical item sequence being known only to the first user, the first device (122 and 124) is configured to:
- request a user to point consecutively at at least one area in which at least one graphical item is included;
- present (410) a sequence of at least one graphical item;
- capture (414) a sequence of at least one area pointed by the user;
- verify (418) whether the sequence of the at least one user pointed area does or does not include the reference graphical item sequence; and
- authenticate (420) the first user only if the sequence of the at least one user pointed area includes the reference graphical item sequence.

10. A system (10) for authenticating a first user (11),
**characterized in that,** the system including a first device (12) and at least one second device (14), the first device comprising means (124) for storing a sequence of at least one reference graphical item, as a reference graphical item sequence, the reference graphical item sequence being known only to the first user, the first device or the at least one second device is configured to:
- request a user to point consecutively at at least one area in which at least one graphical item is included;
- present (410) a sequence of at least one graphical item;
- capture (414) a sequence of at least one area pointed by the user;
- verify (418) whether the sequence of the at least one user pointed area does or does not include the reference graphical item sequence; and
- authenticate (420) the first user only if the sequence of the at least one user pointed area includes the reference graphical item sequence.
